# FASCICULE DE BREVET EUROPEEN

(11) **EP 3 343 198 B1**
(45) Date de publication et mention de la délivrance du brevet: **04.12.2024**
(21) Numéro de dépôt: 17210491.1
(22) Date de dépôt: 22.12.2017
(51) Int. Cl.: G01N 1/22, G01N 33/00

(54) **PROCÉDÉ ET DISPOSITIF MOBILE DE PRÉLÈVEMENT D'UN ÉCHANTILLON DE GAZ SOUS PRESSION ISSU D'UNE CANALISATION**
VERFAHREN UND MOBILE VORRICHTUNG ZUR ENTNAHME EINER UNTER DRUCK STEHENDEN GASPROBE AUS EINER LEITUNG
METHOD AND MOBILE DEVICE FOR TAKING A PRESSURISED GAS SAMPLE FROM A PIPE

(30) Priorité: 27.12.2016 FR 1663431
(43) Date de publication de la demande: 04.07.2018
(73) Titulaire: GRTgaz, 92270 Bois-Colombes (FR)
(72) Inventeur: THEBAULT, Patrick, 92400 Courbevoie (FR)
(74) Mandataire: Cornuejols, Georges

(56) Documents cités:
- EP-A1- 1 170 710
- DE-U1- 29 911 343
- FR-A1- 2 397 592
- FR-A1- 2 930 340
- US-A- 4 459 266
- US-A- 5 551 310
- US-A1- 2008 047 370
- US-B2- 8 986 625

## Description

### DOMAINE TECHNIQUE DE L'INVENTION

La présente invention vise un dispositif mobile de prélèvement d'un échantillon de gaz sous pression issu d'une canalisation et un procédé de prélèvement d'un échantillon de gaz sous pression issu d'une canalisation. Elle s'applique, notamment, au domaine de l'analyse de la qualité du biométhane produit avant injection de ce biométhane sur un réseau de distribution ou de transport de gaz. Plus généralement, cette invention s'applique à l'analyse de la qualité de tout gaz issu d'une canalisation d'un réseau de production ou de distribution de gaz.

### ÉTAT DE LA TECHNIQUE

Dans le domaine de l'analyse de la qualité d'un gaz issu d'une canalisation, on connaît aujourd'hui des systèmes assemblés sur un lieu de prélèvement du gaz. Toutefois, la multiplication des équipements rend l'assemblage de ceux-ci complexe lorsque les canalisations sont difficilement accessibles où que l'espace d'assemblage est réduit.

Ainsi, ces systèmes conduisaient à une perte de temps de l'opérateur et, parfois, à une impossibilité de réaliser le prélèvement faute de place.

FR0802241A concerne un procédé d'échantillonnage de sulfure d'hydrogène, ainsi qu'un dispositif adapté à la mise en oeuvre de ce procédé selon le préambule des revendications indépendantes.

### OBJET DE L'INVENTION

La présente invention vise à remédier à tout ou partie de ces inconvénients. L'invention est exposée dans le jeu de revendications joint.

À cet effet, selon un premier aspect, la présente invention vise un dispositif mobile de prélèvement d'un échantillon de gaz sous pression issu d'une canalisation, qui comporte, dans un boîtier unique :
- une fixation amovible d'une conduite d'entrée à un piquage de la canalisation,
- un détendeur du gaz traversant la conduite d'entrée,
- au moins une conduite intermédiaire configurée pour transférer le gaz issu du détendeur,
- un moyen de mesure du débit de gaz traversant au moins une conduite intermédiaire,
- un moyen de régulation du débit de gaz traversant au moins une conduite intermédiaire et
- une fixation amovible d'une conduite de sortie, reliée à au moins une conduite intermédiaire, configurée pour être fixée à un préleveur.

Grâce à ces dispositions, l'opérateur n'a pas à assembler sur site le dispositif de prélèvement, ce qui permet à la fois un gain de temps et un gain d'espace pour réaliser le prélèvement.

Dans des modes de réalisation, le dispositif objet de la présente invention comporte un moyen de commande du détendeur configuré pour commander la détente du gaz à une pression déterminée.

Ces modes de réalisation permettent à l'opérateur de sélectionner la pression de détente du gaz.

Dans des modes de réalisation, le dispositif objet de la présente invention comporte au moins deux conduites intermédiaires, et, pour chaque conduite intermédiaire :
- un moyen de mesure du débit de gaz traversant au moins une conduite intermédiaire et
- un moyen de régulation du débit de gaz traversant au moins une conduite intermédiaire.

Ces modes de réalisation permettent de prélever deux échantillons de gaz simultanément.

Dans des modes de réalisation, le dispositif objet de la présente invention comporte, sur chaque conduite intermédiaire, une vanne de purge du gaz dans ladite conduite intermédiaire, connectée à un évent.

Ces modes de réalisation permettent d'éviter un endommagement du préleveur par surpression dans ce préleveur.

Dans l'invention, au moins une conduite intermédiaire comporte une partie flexible positionnée en amont du moyen de mesure du débit et du moyen de régulation du débit, le dispositif comportant un moyen de fixation d'un préleveur pour connecter ce préleveur à une partie de la conduite intermédiaire inflexible reliée au détendeur d'une part et à la partie flexible d'autre part.

Ces modes de réalisation permettent de positionner, dans le boîtier, un préleveur de dimension variable.

Dans des modes de réalisation, le dispositif objet de la présente invention comporte, à une extrémité de la partie flexible, configurée pour être fixée au préleveur, une vanne montée mobile sur un rail.

Le dispositif objet de la présente invention comporte un moyen de déplacement d'une extrémité de la partie flexible, configurée pour être fixée au préleveur, le long d'un axe.

Dans des modes de réalisation, le moyen de déplacement est une vanne, montée mobile sur un rail, fixée à l'extrémité de la partie flexible.

Dans des modes de réalisation, le moyen de déplacement est un bras télescopique.

Dans des modes de réalisation, le dispositif objet de la présente invention comporte un automate configuré pour actionner le moyen de déplacement.

Dans des modes de réalisation, le dispositif objet de la présente invention comporte un détecteur de fuite de gaz au niveau d'un préleveur.

Dans des modes de réalisation, le dispositif objet de la présente invention comporte un émetteur d'un signal d'alarme déclenché lorsqu'une fuite est détectée par le détecteur.

Dans des modes de réalisation, la conduite de sortie est fixée sur un évent.

Dans des modes de réalisation, le boîtier est formé de deux parties détachables, le dispositif comportant une attache amovible entre les deux parties.

Dans des modes de réalisation, au moins une partie du boîtier présente des propriétés mécaniques antichocs.

Selon un deuxième aspect, la présente invention vise un procédé de prélèvement d'un échantillon de gaz sous pression issu d'une canalisation, qui comporte :
- une étape de fixation amovible d'une conduite d'entrée d'un boîtier mobile à un piquage de la canalisation,
- une étape de fixation amovible d'une conduite de sortie du boîtier à un préleveur,
- une étape de détente du gaz traversant la conduite d'entrée,
- au moins une étape intermédiaire de transfert du gaz issu de l'étape de détente,
- une étape de mesure du débit de gaz transféré au cours d'au moins une étape intermédiaire de transfert et
- une étape de régulation du débit de gaz transféré au cours d'au moins une étape intermédiaire de transfert.

Les buts, avantages et caractéristiques particulières du procédé objet de la présente invention étant similaires à ceux du dispositif objet de la présente invention, ils ne sont pas rappelés ici.

### BRÈVE DESCRIPTION DES FIGURES

D'autres avantages, buts et caractéristiques particulières de l'invention ressortiront de la description non limitative qui suit d'au moins un mode de réalisation particulier du dispositif et du procédé objets de la présente invention, en regard des dessins annexés, dans lesquels :
- la figure 1 représente, schématiquement, un premier mode de réalisation particulier du dispositif objet de la présente invention,
- la figure 2 représente, schématiquement, un deuxième mode de réalisation particulier du dispositif objet de la présente invention,
- la figure 3 représente, schématiquement, un troisième mode de réalisation particulier du dispositif objet de la présente invention,
- la figure 4 représente, schématiquement et sous forme d'un logigramme, une succession d'étapes d'un mode de réalisation particulier du procédé objet de la présente invention et
- la figure 5 représente, schématiquement, un quatrième mode de réalisation particulier du dispositif objet de la présente invention.

### DESCRIPTION D'EXEMPLES DE RÉALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note dès à présent que les figures ne sont pas à l'échelle.

Par « boîtier unique », on entend tout volume fermé dont le volume intérieur est occupé au moins par les moyens listés comme tels ci-dessous. Ce boîtier peut être formé en une seule pièce ou en une pluralité de pièces. Préférentiellement, ce boîtier comporte une ouverture permettant la manipulation des moyens à l'intérieur du volume.

Dans des variantes, le boîtier comporte une fenêtre permettant à un opérateur de voir au moins une partie du contenu du boîtier. Dans des variantes préférentielles, ce boîtier comporte une manette et présente la forme d'une mallette, ce qui permet à un opérateur de transporter aisément le dispositif objet de la présente invention.

Dans des variantes, ce boîtier est formé de deux parties reliées par une liaison, par exemple pivot de type charnière de manière à présenter deux configurations : l'une dans laquelle volume du boîtier est fermé et l'autre dans laquelle le boîtier est ouvert. Dans des variantes, les deux parties sont intégralement amovibles l'une de l'autre et reliées entre-elles par une attache de solidarisation lorsque ces parties doivent être mécaniquement solidaires, lors du transport du dispositif par exemple. Une telle attache de solidarisation est, par exemple, un mécanisme à enclipsage ou vissage par exemple.

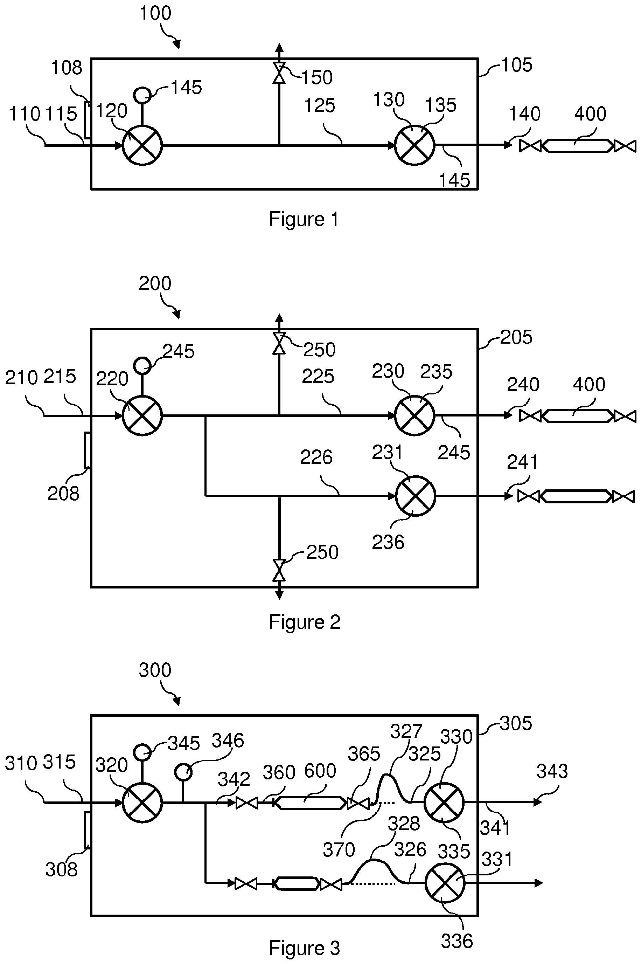

Dans ces modes de réalisation, le boîtier, 105, 205 et/ou 305, tel qu'illustré en figures 1 à 3, est formé de deux parties détachables, le dispositif, 100, 200 et/ou 300, comportant une attache, 108, 208, 308 amovible entre les deux parties.

Dans des modes de réalisation, au moins une partie du boîtier présente des propriétés mécaniques antichocs.

Ces propriétés mécaniques antichocs sont atteintes, par exemple, par le matelassage intérieur en mousse du boîtier ou par la fixation de coins renforcés, en métal par exemple, et arrondis aux coins du boîtier de manière à éviter un enfoncement de ces coins en cas de choc.

Par « préleveur », on entend tout volume de stockage du gaz, pressurisé ou non. Un tel préleveur prend, par exemple, la forme d'un cylindre creux muni de deux ouvertures chacune isolée par une vanne à actionnement manuel ou automatique.

Par « préleveur », on entend également tout volume de captage de composé, c'est à dire de volume comportant un réactif, réagissant avec un composé d'intérêt, et configuré pour être traversé par du gaz de manière à révéler la présence, ou l'absence, du composé dans le gaz.

Par « conduite intermédiaire de transfert », on entend toute tuyauterie positionnée entre le détendeur et le moyen de mesure et/ou le moyen de régulation.

On observe, sur la figure 1, qui n'est pas à l'échelle, une vue schématique d'un mode de réalisation du dispositif 100 objet de la présente invention. Ce dispositif 100 mobile de prélèvement d'un échantillon de gaz sous pression issu d'une canalisation, comporte, dans un boîtier 105 unique :
- une fixation 110 amovible d'une conduite 115 d'entrée à un piquage de la canalisation,
- un détendeur 120 du gaz traversant la conduite d'entrée,
- au moins une conduite 125 intermédiaire configurée pour transférer le gaz issu du détendeur,
- un moyen 130 de mesure du débit de gaz traversant au moins une conduite intermédiaire,
- un moyen 135 de régulation du débit de gaz traversant au moins une conduite intermédiaire et
- une fixation 140 amovible d'une conduite 141 de sortie, reliée à au moins une conduite intermédiaire, configurée pour être fixée à un préleveur 400.

La fixation amovible est, par exemple, réalisée par la pose d'un raccord serti contre le piquage et par l'insertion d'un embout, du dispositif 100, contre ce raccord. Ce raccord est, par exemple, un raccord sans joint de la marque Swagelok (Marque Déposée).

Le gaz pénétrant dans la conduite 115 d'entrée est dirigé vers le détendeur 120 où ce gaz est détendu à une pression en permettant le stockage dans le préleveur 400.

Ce détendeur 120 est, par exemple, un détendeur à simple étage configuré pour abaisser la pression du gaz à une pression prédéterminée.

Dans des modes de réalisation préférentiels, tels que celui représenté en figures 1, le dispositif 100 comporte un moyen 145 de commande du détendeur configuré pour commander la détente du gaz à une pression déterminée.

Ce moyen 145 de commande est actionné manuellement par un utilisateur via un appareillage mécanique dont la manipulation provoque l'émission d'une commande ou via un appareillage numérique qui reçoit, d'un périphérique de commande de type ordiphone par exemple, une instruction d'émission de commande. Dans ces variantes, la transmission de commande entre le périphérique et le dispositif 100 est réalisé par une liaison filaire ou sans-fil.

Le gaz détendu traverse ensuite la conduite 125 de transfert intermédiaire.

Dans des variantes, telle que celle représentée en figure 3, le dispositif 300 comporte, un indicateur 346 visuel de la pression traversant la conduite 325 intermédiaire.

Le moyen 130 de mesure est, par exemple, un débitmètre massique. Ce débitmètre réalise une mesure du débit de gaz par conductivité thermique, par exemple.

Le moyen 135 de régulation est, par exemple, un régulateur de débit. Ce régulateur de débit est, par exemple, une vanne ou un diaphragme actionné en fonction de la différence entre le débit mesuré et une valeur consigne déterminée. Cette valeur consigne peut être prédéterminée ou déterminée via un moyen de commande (non représenté) similaire au moyen 145 de commande.

Préférentiellement, le moyen 130 de mesure et le moyen 135 de régulation sont confondus en un moyen unique de mesure et de régulation.

La fixation amovible est, par exemple, réalisée par la pose d'un raccord serti contre le piquage et par l'insertion d'un embout, du dispositif 100, contre ce raccord. Ce raccord est, par exemple, un raccord sans joint de la marque Swagelok (Marque Déposée).

On observe, sur la figure 2, qui n'est pas à l'échelle, une vue schématique d'un mode de réalisation du dispositif 200 objet de la présente invention. Ce dispositif 200 mobile de prélèvement d'un échantillon de gaz sous pression issu d'une canalisation, comporte, dans un boîtier 205 unique :
- une fixation 210 amovible d'une conduite 215 d'entrée à un piquage de la canalisation,
- un détendeur 220 du gaz traversant la conduite d'entrée,
- au moins une conduite 225 intermédiaire configurée pour transférer le gaz issu du détendeur,
- un moyen 230 de mesure du débit de gaz traversant au moins une conduite intermédiaire,
- un moyen 235 de régulation du débit de gaz traversant au moins une conduite intermédiaire et
- une fixation 240 amovible d'une conduite 241 de sortie, reliée à au moins une conduite intermédiaire, configurée pour être fixée à un préleveur 400.

La fixation 210, la conduite 215 d'entrée, le détendeur 220, la conduite 225 intermédiaire, le moyen de mesure 130, le moyen de régulation 135, la fixation 240 et la conduite 241 sont respectivement similaires à la fixation 110, à la conduite d'entrée 115, au détendeur 120, à la conduite 125 intermédiaire, au moyen 130 de mesure, au moyen 135 de régulation, à la fixation 140 et à la conduite 141 de sortie tels que décrits en regard de la figure 1.

Dans ce deuxième mode de réalisation, le dispositif 200 comporte une dérivation sur la conduite 225 intermédiaire, cette dérivation formant une deuxième conduite 226 intermédiaire. Le gaz traversant cette deuxième conduite 226 intermédiaire est dirigé vers un moyen 231 de mesure du débit et un moyen 236 de régulation similaires au moyen 230 de mesure et au moyen de régulation 235.

Le gaz quittant ces moyens, 231 et 236, de mesure et de régulation est transmis à une conduite de sortie, similaire à la conduite 241 de sortie, cette conduite de sortie étant connectée à un préleveur via une fixation amovible similaire à la fixation 240 amovible.

Dans des modes de réalisation particuliers des dispositifs, 100 et 200, tels que décrits en regard des figures 1 et 2, ces dispositifs, 100 et 200, comportent sur chaque conduite, 125, 225 et 226, intermédiaire, une vanne, 150 ou 250, de purge du gaz dans ladite conduite intermédiaire, connectée à un évent,155 ou 255.

Chaque vanne, 150 ou 250, est une vanne à activation manuelle ou automatique dont la finalité est de permettre la purge de tout gaz dans le dispositif, 100 ou 200, situé dans les conduites, 241, de sortie et dans la conduite, 125, 225 ou 226, intermédiaire à laquelle cette vanne, 150 ou 250, est rattachée.

On observe, sur la figure 3, qui n'est pas à l'échelle, une vue schématique d'un mode de réalisation du dispositif 300 objet de la présente invention. Ce dispositif 300 mobile de prélèvement d'un échantillon de gaz sous pression issu d'une canalisation, comporte, dans un boîtier 305 unique :
- une fixation 310 amovible d'une conduite 315 d'entrée à un piquage de la canalisation,
- un détendeur 320 du gaz traversant la conduite d'entrée,
- au moins une conduite 325 intermédiaire configurée pour transférer le gaz issu du détendeur,
- un moyen 330 de mesure du débit de gaz traversant au moins une conduite intermédiaire,
- un moyen 335 de régulation du débit de gaz traversant au moins une conduite intermédiaire et
- une fixation 360 amovible d'une conduite 342 de sortie, reliée à au moins une conduite intermédiaire, configurée pour être fixée à un préleveur 600.

La fixation 210, la conduite 215 d'entrée, le détendeur 220, le moyen de mesure 130, le moyen de régulation 135 et la conduite 241 sont respectivement similaires à la fixation 110, à la conduite d'entrée 115, au détendeur 120, au moyen 130 de mesure, au moyen 135 de régulation et à la conduite 141 de sortie tels que décrits en regard de la figure 1.

Ce dispositif 300 comporte, de manière similaire au dispositif 200 tel que décrit en regard de la figure 2, une deuxième conduite 326 intermédiaire et, pour cette deuxième conduite 326 intermédiaire, un moyen 331 de mesure du débit de gaz et un moyen de régulation 336 du débit de gaz, ces moyens, 331 et 336, de mesure et de régulation étant similaires au moyens, 330 et 335, de mesure et de régulation.

Toutefois, les conduites, 325 et 326, intermédiaires différent des conduites, 125, 225 et 226, telles que décrites en regard des figures 1 et 2 en ce que ces conduites, 325 et 326, intermédiaires présentent une partie flexible, 327 et 328.

Pour chaque conduite, 325 et 326, intermédiaire comportant une partie flexible, 327 et 328, cette partie flexible, 327 et 328, est positionnée en amont des moyens, 330, 331, 335 et 336, de mesure et de régulation du débit de gaz.

Ces parties flexibles, 327 et 328, permettent d'adapter la longueur totale de la conduite, 325 et 326, intermédiaire en fonction de la longueur d'un préleveur 400 positionné entre, d'une part, la partie flexible, 327 ou 328, et, d'autre part, à une partie de la conduite, 325 ou 326, reliée au détendeur 320.

La fixation à la partie de la conduite, 325 ou 326, intermédiaire reliée au détendeur 320 est réalisée par un moyen 360 de fixation amovible, alternativement dite « fixation amovible », ce moyen 360 de fixation mettant en oeuvre un mécanisme d'enclipsage, de serrage ou de vissage par exemple.

Dans l'invention, le dispositif objet de la présente invention comporte un moyen, 365 et 370, de déplacement d'une extrémité de la partie, 327 ou 328, flexible, configurée pour être fixée au préleveur 600, le long d'un axe. On comprend, ici, qu'il s'agit d'au moins un axe, le moyen de déplacement pouvant aller jusqu'à permettre un déplacement tridimensionnel.

Au moins un axe correspond, préférentiellement, à un axe d'insertion du préleveur dans le dispositif. Pour faciliter le dépôt du préleveur, une rigole peut être prévue de manière à ce qu'un opérateur glisse le préleveur dans la rigole avant de brancher le préleveur au circuit de gaz.

Dans des modes de réalisation, le moyen de déplacement est une vanne 365, montée mobile sur un rail 370, fixée à l'extrémité de la partie flexible.

Dans des modes de réalisation, le dispositif 300 comporte, à une extrémité de la partie flexible, 327 ou 328, configurée pour être fixée au préleveur 600, une vanne, 365 montée mobile sur un rail 370.

Le rail 370 permet un déplacement axial de la vanne 365 à une position comprise entre deux positions extrêmes correspondant aux longueurs d'extension minimales et maximales voulues pour la partie flexible. Entre ceux deux positions, il est possible de positionner un préleveur 600 de longueur variable, tant que cette longueur est inférieure à la longueur d'extension maximale, et d'adapter la position de la partie flexible, 327 ou 328, pour que la vanne 365 soit positionnée au contact d'un orifice du préleveur 600.

Le déplacement de la vanne 365 sur le rail 370 est réalisé manuellement ou automatiquement.

Dans des modes de réalisation, le moyen 375 de déplacement est un bras télescopique. Le bras télescopique est fixé à la partie flexible de la conduite, par serrage par exemple.

Ce bras télescopique est préférentiellement fixé à l'intérieur du boîtier. Ce bras télescopique est actionné manuellement ou automatiquement.

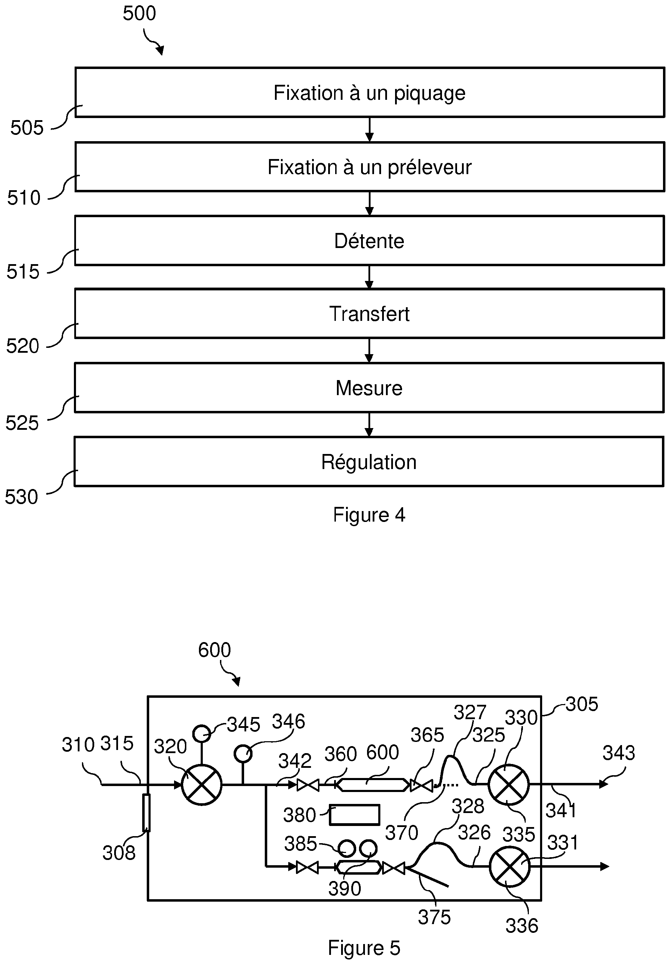

Dans des modes de réalisation, le dispositif 600, tel que représenté en figure 5, comporte un automate 380 configuré pour actionner le moyen de déplacement.

Cet automate est configuré pour, par exemple, recevoir une commande de déplacement de la part d'un opérateur, par l'actionnement d'un bouton-pression. Lorsque cette commande est reçue, le moyen de déplacement est activé de sorte à ce que le préleveur soit automatiquement déplacé et/ou connecté au circuit de gaz par le biais des fixations amovibles prévues à cet effet. Des moteurs peuvent ainsi être prévus pour assurer ce déplacement et/ou cette connexion.

Dans des modes de réalisation, le dispositif 600 comporte un détecteur 385 de fuite de gaz au niveau d'un préleveur.

Ce détecteur 385 peut être branché sur le circuit de gaz, au niveau d'une conduite du boîtier, ou être externe à ce circuit de gaz. Dans le premier cas, le détecteur 385 est, par exemple, configuré pour détecter une différence de débit entre l'amont et l'aval d'un préleveur, de sorte à déterminer qu'une fuite de gaz a lieu.

Dans le deuxième cas, le détecteur 385 peut être de tout type de détecteur de gaz connu de l'homme du métier et positionné à l'intérieur du boîtier. Dans ce deuxième cas, le détecteur 385 peut être positionné a proximité d'un équipement particulier du dispositif de sorte à cibler prioritairement certains équipements pour identifier des fuites.

Dans des modes de réalisation, le dispositif 600 comporte un émetteur 390 d'un signal d'alarme déclenché lorsqu'une fuite est détectée par le détecteur 385. L'émetteur 390 est, par exemple, un émetteur de données, de signaux visuels et/ou sonores. Cet émetteur de données peut être configuré pour communiquer avec une centrale d'alarme distante ou un périphérique externe porté par l'opérateur. Cet émetteur de données peut être configuré pour émettre des signaux filaires ou sans-fil.

Dans le mode de réalisation tel qu'illustré en figure 3, la conduite 341 de sortie est fixée sur un évent 343.

Dans le mode de réalisation tel qu'illustré en figure 3, le préleveur 600 vise à capter des composés, c'est à dire à faire réagir ces composés, souvent en proportions minoritaires voire ultraminoritaires dans le flux de gaz, avec des réactifs positionnés dans le préleveur 600. Pour cette raison, le flux de gaz peut être relâché à travers un évent 343 une fois que ce gaz a traversé le préleveur 600.

Le préleveur 600 est ici positionné en amont des moyens, 330 et 335, de mesure et de régulation afin d'éviter une pollution de ces moyens, 330 et 335, par les composés dont la capture est réalisée par le préleveur 600.

Dans des variantes, le dispositif 300 comporte un préleveur 600 de type capteur et un préleveur 400 de type stockage, tel que décrit en regard des figures 1 et 2, chaque préleveur, 600 et 400, étant relié à une conduite intermédiaire différente.

Dans le cas d'un préleveur 400 de type stockage, ce préleveur 400 peut être fixé à une conduite intermédiaire 125 tel que décrite en regard de la figure 1 ou à une conduite intermédiaire 325 telle que décrite en regard de la figure 3. Dans ce cas, la vanne 365 mobile sur le rail est positionnée au contact de la partie fixe de la conduite 327 reliée au détendeur 320 de sorte à ce que la conduite 325 intermédiaire présente un fonctionnement analogue au fonctionnement de la conduite 125 intermédiaire telle que décrite en regard de la figure 1.

On observe, sur la figure 4, une succession d'étapes particulière du procédé 500 objet de la présente invention. Ce procédé 500 de prélèvement d'un échantillon de gaz sous pression issu d'une canalisation, comporte :
- une étape 505 de fixation amovible d'une conduite d'entrée d'un boîtier mobile à un piquage de la canalisation,
- une étape 510 de fixation amovible d'une conduite de sortie du boîtier à un préleveur,
- une étape 515 de détente du gaz traversant la conduite d'entrée,
- au moins une étape 520 intermédiaire de transfert du gaz issu de l'étape de détente,
- une étape 525 de mesure du débit de gaz transféré au cours d'au moins une étape intermédiaire de transfert et
- une étape 530 de régulation du débit de gaz transféré au cours d'au moins une étape intermédiaire de transfert.

Ce procédé 500 est réalisé, par exemple, par la mise en oeuvre de l'un des dispositifs, 100, 200 ou 300, tel que décrits en regard des figures 1, 2 ou 3.

## Revendications

1. Dispositif (100, 200, 300) mobile de prélèvement d'un échantillon de gaz sous pression issu d'une canalisation, qui comporte, dans un boîtier (105, 205, 305) unique :
- une fixation (110, 210, 310) amovible d'une conduite (115, 215, 315) d'entrée à un piquage de la canalisation,
- un détendeur (120, 220, 320) du gaz traversant la conduite d'entrée,
- au moins une conduite (125, 225, 325) intermédiaire configurée pour transférer le gaz issu du détendeur,
- un moyen (130, 230, 330) de mesure du débit de gaz traversant au moins une conduite intermédiaire,
- un moyen (135, 235, 335) de régulation du débit de gaz traversant au moins une conduite intermédiaire et
- une fixation (140, 240, 360) amovible d'une conduite (241, 342) de sortie, reliée à au moins une conduite intermédiaire, configurée pour être fixée à un préleveur (400, 600) ;
et au moins une conduite (325, 326) intermédiaire comporte une partie flexible (327, 328) positionnée en amont du moyen (330, 331) de mesure du débit et du moyen (335, 336) de régulation du débit, le dispositif comportant :
- un moyen (360) de fixation d'un préleveur (600) pour connecter ce préleveur à une partie de la conduite intermédiaire inflexible reliée au détendeur, d'une part, et à la partie flexible d'autre part,
**caractérisé en ce que** le dispositif comporte
pour positionner un préleveur de longueur variable, un moyen (365, 370) de déplacement, le long d'un axe d'insertion du préleveur dans le dispositif, d'une extrémité de la partie (327, 328) flexible configurée pour être fixée au préleveur (600) à une position comprise entre deux positions extrêmes correspondant aux longueurs d'extension minimales et maximales voulues pour la partie flexible.

2. Dispositif (100, 200, 300) selon la revendication 1, qui comporte un moyen (145, 245, 345) de commande du détendeur configuré pour commander la détente du gaz à une pression déterminée.

3. Dispositif (200, 300) selon l'une des revendications 1 ou 2, qui comporte au moins deux conduites (225, 226, 325, 326) intermédiaires, et, pour chaque conduite intermédiaire :
- un moyen (230, 231, 330, 331) de mesure du débit de gaz traversant au moins une conduite intermédiaire et
- un moyen (235, 236, 335, 336) de régulation du débit de gaz traversant au moins une conduite intermédiaire.

4. Dispositif (100, 200) selon l'une des revendications 1 à 3, qui comporte, sur chaque conduite (125, 225, 226) intermédiaire, une vanne (150, 250) de purge du gaz dans ladite conduite intermédiaire, connectée à un évent (155, 255).

5. Dispositif (300, 600) selon l'une des revendications 1 à 4, dans lequel le moyen de déplacement comporte une vanne (365), montée mobile sur un rail (370), fixée à l'extrémité de la partie flexible.

6. Dispositif (300, 600) selon l'une des revendications 1 à 4, dans lequel le moyen (375) de déplacement comporte un bras télescopique.

7. Dispositif (300, 600) selon l'une des revendications 1 à 6, qui comporte un automate (380) configuré pour actionner le moyen de déplacement.

8. Dispositif (300, 600) selon l'une des revendications 1 à 7, qui comporte un détecteur (385) de fuite de gaz au niveau d'un préleveur.

9. Dispositif (300, 600) selon la revendication 8, qui comporte un émetteur (390) d'un signal d'alarme déclenché lorsqu'une fuite est détectée par le détecteur (385).

10. Dispositif (100, 200, 300, 600) selon l'une des revendications 1 à 9, dans lequel au moins une partie du boîtier (105, 205, 305) présente des propriétés mécaniques antichocs.

11. Procédé (500) de prélèvement d'un échantillon de gaz sous pression issu d'une canalisation, **caractérisé en ce qu'**il comporte :
- une étape (505) de fixation amovible d'une conduite d'entrée d'un boîtier mobile à un piquage de la canalisation,
- une étape (510) de fixation amovible d'une conduite de sortie du boîtier à un préleveur,
- une étape (515) de détente du gaz traversant la conduite d'entrée,
- au moins une étape (520) intermédiaire de transfert du gaz issu de l'étape de détente,
- une étape (525) de mesure du débit de gaz transféré au cours d'au moins une étape intermédiaire de transfert et
- une étape (530) de régulation du débit de gaz transféré au cours d'au moins une étape intermédiaire de transfert
le procédé comporte de plus une étape de positionnement d'au moins une conduite (325, 326) intermédiaire comportant une partie flexible (327, 328), en amont de l'étape (330, 331) de mesure du débit et de l'étape (335, 336) de régulation du débit, et une étape (360) de fixation d'un préleveur (600) pour connecter ce préleveur à une partie de la conduite intermédiaire inflexible reliée au détendeur d'une part et à la partie flexible d'autre part, **caractérisé en ce que** cette étape de fixation du préleveur comporte pour positionner un préleveur de longueur variable, un déplacement, par un moyen de déplacement, le long d'un axe d'insertion du préleveur dans le dispositif, d'une extrémité de la partie (327, 328) flexible configurée pour être fixée au préleveur (600) à une position comprise entre deux positions extrêmes correspondant aux longueurs d'extension minimales et maximales voulues pour la partie flexible.

## Patentansprüche

1. Mobile Vorrichtung (100, 200, 300) zur Entnahme einer unter Druck stehenden Gasprobe aus einer Leitung, die in einem einzigen Gehäuse (105, 205, 305) umfasst:
- eine lösbare Befestigung (110, 210, 310) einer Einlassleitung (115, 215, 315) an einem Abzweig der Leitung,
- ein Druckminderer (120, 220, 320) des Gases, das die Einlassleitung durchquert,
- wenigstens eine Zwischenleitung (125, 225, 325), die ausgelegt ist, um das Gas aus dem Druckminderer zu übertragen,
- ein Mittel (130, 230, 330) zur Messung der Gasmenge, die mindestens eine Zwischenleitung durchquert,
- ein Mittel (135, 235, 335) zur Regelung der Gasmenge, die mindestens eine Zwischenleitung durchquert, und
- eine lösbare Befestigung (140, 240, 360) einer Auslassleitung (241, 342), die mit wenigstens einer Zwischenleitung verbunden ist, die ausgelegt ist, um an einem Probenehmer (400, 600) befestigt zu sein;
und wenigstens eine Zwischenleitung (325, 326) einen flexiblen Teil (327, 328) aufweist, der dem Durchsatzmessmittel (330, 331) und dem Durchsatzregelmittel (335, 336) vorgelagert positioniert ist, wobei die Vorrichtung aufweist:
- ein Mittel (360) zur Befestigung eines Probenehmers (600), um diesen Probenehmer an einen Teil der unflexiblen Zwischenleitung anzuschließen, die mit dem Druckminderer einerseits und mit dem flexiblen Teil andererseits verbunden ist,
**dadurch gekennzeichnet, dass** die Vorrichtung zum Positionieren eines Probenehmers mit variabler Länge ein Mittel (365, 370) zur Verschiebung entlang einer Einführachse des Probenehmers in die Vorrichtung von einem Ende des flexiblen Teils (327, 328), das ausgelegt ist, um am Probenehmer (600) befestigt zu sein, in einer Position zwischen zwei Endpositionen, die den für den flexiblen Teil gewünschten minimalen und maximalen Ausdehnungslängen entsprechen, aufweist.

2. Vorrichtung (100, 200, 300) nach Anspruch 1, die ein Mittel (145, 245, 345) zur Steuerung des Druckminderers umfasst, das ausgelegt ist, um die Druckminderung des Gases auf einen bestimmten Druck zu steuern.

3. Vorrichtung (200, 300) nach einem der Ansprüche 1 oder 2, die mindestens zwei Zwischenleitungen (225, 226, 325, 326) umfasst, und für jede Zwischenleitung:
- ein Mittel (230, 231, 330, 331) zur Messung der Gasmenge, die mindestens eine Zwischenleitung durchquert, und
- ein Mittel (235, 236, 335, 336) zur Regelung der Gasmenge, die mindestens eine Zwischenleitung durchquert.

4. Vorrichtung (100, 200) nach einem der Ansprüche 1 bis 3, die an jeder Zwischenleitung (125, 225, 226) ein Ventil (150, 250) zur Entlüftung des Gases in der Zwischenleitung umfasst, das mit einer Entlüftungsöffnung (155, 255) verbunden ist.

5. Vorrichtung (300, 600) nach einem der Ansprüche 1 bis 4, wobei das Verschiebemittel ein Ventil (365) umfasst, das beweglich auf einer Schiene (370) angebracht und am Ende des flexiblen Teils befestigt ist.

6. Vorrichtung (300, 600) nach einem der Ansprüche 1 bis 4, wobei das Verschiebemittel (375) einen Teleskoparm aufweist.

7. Vorrichtung (300, 600) nach einem der Ansprüche 1 bis 6, die eine Automatik (380) umfasst, die zum Betätigen des Verschiebemittels ausgelegt ist.

8. Vorrichtung (300, 600) nach einem der Ansprüche 1 bis 7, die einen Gasleckdetektor (385) im Bereich eines Probenehmers umfasst.

9. Vorrichtung (300, 600) nach Anspruch 8, die einen Sender (390) eines Alarmsignals umfasst, das ausgelöst wird, wenn ein Leck vom Detektor (385) erkannt wird.

10. Vorrichtung (100, 200, 300, 600) nach einem der Ansprüche 1 bis 9, wobei wenigstens ein Teil des Gehäuses (105, 205, 305) stoßfeste mechanische Eigenschaften aufweist.

11. Verfahren (500) zur Entnahme einer unter Druck stehenden Gasprobe aus einer Leitung, **dadurch gekennzeichnet, dass** es aufweist:
- einen Schritt (505) des lösbaren Befestigens einer Einlassleitung eines beweglichen Gehäuses an einem Abzweig der Leitung,
- einen Schritt (510) des lösbaren Befestigens einer Auslassleitung des Gehäuses an einem Probenehmer,
- einen Schritt (515) des Druckminderns des Gases, das die Einlassleitung durchquert,
- wenigstens einen Zwischenschritt (520) des Übertragens des aus dem Druckminderungsschritt stammenden Gases,
- einen Schritt (525) des Messens der während mindestens eines Transferzwischenschritts übertragenen Gasmenge und
- einen Schritt (530) des Regelns der während mindestens eines Transferzwischenschritts übertragenen Gasmenge,
wobei das Verfahren ferner einen Schritt des Positionierens mindestens einer Zwischenleitung (325, 326) mit einem flexiblen Teil (327, 328) vor dem Schritt (330, 331) des Messens der Menge und dem Schritt (335, 336) des Regelns des Menge, und einen Schritt (360) des Befestigens eines Probenehmers (600) zum Anschließen dieses Probenehmers an einen Teil der unflexiblen Zwischenleitung, die mit dem Druckminderer einerseits und dem flexiblen Teil andererseits verbunden ist, umfasst, **dadurch gekennzeichnet, dass** dieser Schritt des Befestigens des Probenehmers zum Positionieren eines Probenehmers mit variabler Länge eine Verschiebung, durch ein Verschiebemittel, entlang einer Einführachse des Probenehmers in die Vorrichtung, eines Endes des flexiblen Teils (327, 328) umfasst, das ausgelegt ist, um am Probenehmer (600) befestigt zu sein, in einer Position zwischen zwei Endpositionen, die den für den flexiblen Teil gewünschten minimalen und maximalen Erstreckungslängen entsprechen.

## Claims

1. Mobile device (100, 200, 300) for taking a sample of a pressurised gas from a pipe, which device comprises, in a single housing (105, 205, 305):
- a removable fastener (110, 210, 310) of an inlet line (115, 215, 315) to a branch of the pipe,
- an expander (120, 220, 320) of the gas passing through the inlet line,
- at least one intermediate line (125, 225, 325) configured to transfer the gas coming from the expander,
- a means (130, 230, 330) for measuring the flow rate of gas passing through at least one intermediate line,
- a means (135, 235, 335) for regulating the flow rate of gas passing through at least one intermediate line, and
- a removable fastener (140, 240, 360) of an outlet line (241, 342), connected to at least one intermediate line, configured to be fixed to a sampler (400, 600);
and at least one intermediate line (325, 326) comprises a flexible portion (327, 328) positioned upstream from the flow rate measurement means (330, 331) and from the flow rate regulation means (335, 336), the device comprising:
- a means (360) for fixing a sampler (600) to connect this sampler to a portion of the inflexible intermediate line connected to the expander, on one side, and the flexible portion, on the other side,
**characterised in that** the device comprises, for positioning a variable-length sampler, a means (365, 370) for moving, along an axis of insertion of the sampler in the device, one end of the flexible portion (327, 328) configured to be fixed to the sampler (600) at a position between two extreme positions corresponding to the desired minimum and maximum extension lengths for the flexible portion.

2. Device (100, 200, 300) according to claim 1, which comprises a means (145, 245, 345) for controlling the expander, configured to control the expansion of the gas to a specified pressure.

3. Device (200, 300) according to one of claims 1 or 2, which comprises at least two intermediate lines (225, 226, 325, 326) and, for each intermediate line:
- a means (230, 231, 330, 331) for measuring the flow rate of gas passing through at least one intermediate line; and
- a means (235, 236, 335, 336) for regulating the flow rate of gas passing through at least one intermediate line.

4. Device (100, 200) according to one of claims 1 to 3, which comprises, on each intermediate line (125, 225, 226), a bleed valve (150, 250) for bleeding gas in said intermediate line, connected to a vent (155, 255).

5. Device (300, 600) according to one of claims 1 to 4, wherein the movement means comprises a valve (365), mounted moveably on a rail (370), fixed to the end of the flexible portion.

6. Device (300, 600) according to one of claims 1 to 4, wherein the movement means (375) comprises a telescopic arm.

7. Device (300, 600) according to one of claims 1 to 6, which comprises an automaton (380) configured to actuate the movement means.

8. Device (300, 600) according to one of claims 1 to 7, which comprises a detector (385) of a gas leak at the location of a sampler.

9. Device (300, 600) according to claim 8, which comprises an emitter (390) of an alarm signal triggered when a leak is detected by the detector (385).

10. Device (100, 200, 300, 600) according to one of claims 1 to 9, wherein at least one portion of the housing (105, 205, 305) has mechanical shock-absorbing properties.

11. Method (500) for taking a sample of a pressurised gas from a pipe, **characterised in that** it comprises:
- a step (505) of removably fastening an inlet line (115, 215, 315) to a branch of the pipe,
- a step (510) of removably fastening an outlet line of the housing to a sampler,
- a step (515) of expanding the gas passing through the outlet line,
- at least one intermediate step (520) of transferring gas coming from the expansion step,
- a step (525) of measuring the flow rate of gas transferred during at least one intermediate transfer step, and
- a step 530 of regulating the flow rate of gas transferred during the intermediate transfer step,
and the method also comprises a step of positioning at least one intermediate line (325, 326) comprising a flexible portion (327, 328), before the flow-rate measurement step (330, 331) and the flow-rate regulation step (335, 336), and a step (360) of fixing a sampler (600) to connect this sampler to a portion of the inflexible intermediate line connected to the expander, on one side, and the flexible portion, on the other side, **characterised in that** this step of fastening the sampler comprises a movement, for positioning a variable-length sampler, by a means for moving, along an axis of insertion of the sampler in the device, one end of the flexible portion (327, 328) configured to be fixed to the sampler (600) at a position between two extreme positions corresponding to the desired minimum and maximum extension lengths for the flexible portion.
